# EUROPEAN PATENT APPLICATION

(11) **EP 4 538 818 A1**
(43) Date of publication of application: **16.04.2025**
(21) Application number: 24821736.6
(22) Date of filing: 29.03.2024
(51) Int. Cl.: G05B 23/02

(54) **FAULT DIAGNOSIS METHOD, SYSTEM, AND DEVICE, AND MEDIUM**

(30) Priority: 29.08.2023 CN 202311105130
(71) Applicant: Chengdu Kawa Technology Co., Ltd., Chengdu, Sichuan 610000 (CN)
(72) Inventor: CHEN, Xi, Chengdu, Sichuan 610000 (CN)
(74) Representative: Cabinet Laurent & Charras
(86) International application number: PCT/CN2024/084907
(87) International publication number: WO 2025/044195

(57) **Abstract**

Provided are a fault diagnosis method, system and device, and a medium. The method includes receiving a vehicle diagnostic push message sent by a remote diagnostic server, where the vehicle diagnostic push message includes at least one of the following: a diagnostic task type or diagnostic script information; acquiring a corresponding target diagnostic script file and a corresponding target diagnostic condition based on the diagnostic task type and/or the diagnostic script information, where the target diagnostic script file is obtained from conversion of a diagnostic database and a diagnostic sequence, and the target diagnostic script file is an interpreted language file; and performing a fault diagnosis on a target vehicle according to the target diagnostic condition and the target diagnostic script file. This saves the remote diagnostic client the trouble of parsing the diagnostic sequence and frequently reading the diagnostic database, thereby reducing the load on the remote diagnostic client and improving the execution efficiency of a diagnostic task. Moreover, this improves the diagnostic efficiency by partitioning diagnostic task types.

## Description

This application claims priority to Chinese Patent Application No. 202311105130.7 filed with the China National Intellectual Property Administration (CNIPA) on Aug. 29, 2023, the disclosure of which is incorporated herein by reference in its entirety.

### TECHNICAL FIELD

The present application relates to the field of vehicle technology, particularly a fault diagnosis method, system and device, and a medium.

### BACKGROUND

With the integration of the Internet and traditional vehicle enterprises, more and more automakers need to perform remote diagnosis and updates on vehicles.

Automotive remote diagnostics refers to a diagnostic technology that relies on the vehicle mobile communication capabilities (Wi-Fi/4G/5G) to enable the automaker's backend (or mobile app) to remotely control and diagnose the vehicle without needing to bring it back to a physical dealership. Remote over-the-air (OTA) updates are one application scenario of remote diagnostics. Additionally, by integrating with cutting-edge technologies such as the Internet of Things (IoT), big data, and cloud computing, remote diagnostics can provide critical support to automakers in areas like R&D testing, production line electrical inspection, and after-sales diagnostics.

Firstly, remote diagnostics can collect data online, thereby reducing development cycles and costs. During the R&D phase, vehicles undergo extensive road tests and durability tests, but the data collection equipment on test vehicles is limited. Through remote diagnostics, any vehicle malfunction occurring during testing can be promptly reported to R&D personnel for analysis and simulation, thereby quickly assisting in fault resolution. Secondly, remote diagnostics can perform initialization and function testing across different stations on the production line as well as production line OTA updates, enabling customized automotive software production to meet the personalized needs of car owners. Finally, remote diagnostics can periodically monitor vehicle status, diagnose vehicle health in real time, provide early warnings of vehicle malfunctions based on big-data statistical analysis, and push maintenance and repair recommendations to manufacturer after-sales service centers for vehicle servicing and guidance.

However, when the diagnostic database is prestored on the vehicle side, the cloud directly sends diagnostic sequence files to the vehicle. The vehicle then parses the diagnostic sequence files and retrieves the corresponding data from the diagnostic database based on the sequence to synthesize diagnostic instructions for diagnosis. Since the vehicle frequently retrieves data from the diagnostic database according to the diagnostic sequence, the resource overhead on the vehicle main node is relatively high, and the operational efficiency is low. Moreover, all diagnostic tasks require the cloud to send diagnostic sequence files, and the vehicle must retrieve data from the diagnostic database and synthesize diagnostic instructions for diagnosis, resulting in a low diagnostic efficiency.

### SUMMARY

The present application provides a fault diagnosis method, system and device, and a medium to address the technical problems of high resource overhead, low operational efficiency, and low diagnostic efficiency in the related art.

According to an aspect of the present application, a fault diagnosis method is provided. The method is applied by a remote diagnostic client.

The method includes receiving a vehicle diagnostic push message sent by a remote diagnostic server, where the vehicle diagnostic push message includes at least one of the following: a diagnostic task type or diagnostic script information; acquiring a corresponding target diagnostic script file and a corresponding target diagnostic condition based on the diagnostic task type and/or the diagnostic script information, where the target diagnostic script file is obtained from conversion of a diagnostic database and a diagnostic sequence, and the target diagnostic script file is an interpreted language file; and performing a fault diagnosis on a target vehicle according to the target diagnostic condition and the target diagnostic script file.

According to another aspect of the present application, a fault diagnosis apparatus is provided. The apparatus is applied by a remote diagnostic client. The apparatus includes a receiving module, an acquisition module, and a diagnostic module.

The receiving module is configured to receive a vehicle diagnostic push message sent by a remote diagnostic server. The vehicle diagnostic push message includes at least one of the following: a diagnostic task type or diagnostic script information.

The acquisition module is configured to acquire a corresponding target diagnostic script file and a corresponding target diagnostic condition based on the diagnostic task type and/or the diagnostic script information. The target diagnostic script file is obtained from conversion of a diagnostic database and a diagnostic sequence. The target diagnostic script file is an interpreted language file.

The diagnostic module is configured to perform a fault diagnosis on a target vehicle according to the target diagnostic condition and the target diagnostic script file.

According to another aspect of the present application, a fault diagnosis system is provided.

The fault diagnosis system includes a remote diagnostic server and a remote diagnostic client. The remote diagnostic server includes a diagnostic management platform, a push server, and a content delivery network. The remote diagnostic client includes a diagnostic client and a diagnostic script engine.

The diagnostic management platform is configured to merge a diagnostic database and a corresponding diagnostic sequence into a corresponding diagnostic script file.

The diagnostic client is configured to, in response to receiving a vehicle diagnostic push message that is sent by the push server and that carries a diagnostic task type and/or diagnostic script information, receive, based on the diagnostic task type and/or the diagnostic script information, a corresponding target diagnostic script file and a corresponding target diagnostic condition sent by the content delivery network; and send the target diagnostic script file to the diagnostic script engine to enable the diagnostic script engine to parse the target diagnostic script file and perform a fault diagnosis on a target vehicle according to the target diagnostic condition and the target diagnostic script file.

The target diagnostic script file is obtained from conversion of the diagnostic database and the corresponding diagnostic sequence by the diagnostic management platform. The target diagnostic script file is an interpreted language file.

According to another aspect of the present application, a fault diagnosis device is provided.

The fault diagnosis device includes at least one processor and a memory communicatively connected to the at least one processor.

The memory stores a computer program executable by the at least one processor to enable the at least one processor to perform the fault diagnosis method of any embodiment of the present application.

According to another aspect of the present application, a computer-readable storage medium is provided. The computer-readable storage medium has computer instructions which, when executed by a processor, cause the processor to perform the fault diagnosis method of any embodiment of the present application.

In solutions of embodiments of the present application, the remote diagnostic server converts the diagnostic database and the diagnostic sequence into a diagnostic script file based on an interpretive language and more operable by the remote diagnostic client and sends the diagnostic script file to the remote diagnostic client. This saves the remote diagnostic client the trouble of parsing the diagnostic sequence and frequently reading the diagnostic database, thereby reducing the load on the remote diagnostic client and improving the execution efficiency of a diagnostic task. Moreover, this improves the diagnostic efficiency by partitioning diagnostic task types to facilitate acquisition of target diagnostic script files from different databases based on task types.

### BRIEF DESCRIPTION OF DRAWINGS

FIG. 1 is a block diagram of a fault diagnosis system according to an embodiment of the present application.
FIG. 2 is a flowchart of a fault diagnosis method according to an embodiment of the present application.
FIG. 3 is a diagram illustrating configuration of a data structure of a diagnostic script file according to an embodiment of the present application.
FIG. 4 is a flowchart of a fault diagnosis method according to an embodiment of the present application.
FIG. 5 is a flowchart of a fault diagnosis method according to an embodiment of the present application.
FIG. 6 is a flowchart of a fault diagnosis method according to an embodiment of the present application.
FIG. 7 is a flowchart of a fault diagnosis method according to an embodiment of the present application.
FIG. 8 is a flowchart of a fault diagnosis method according to an embodiment of the present application.
FIG. 9 is a block diagram of a fault diagnosis system according to an embodiment of the present application.
FIG. 10 is a diagram illustrating the structure of a fault diagnosis apparatus according to an embodiment of the present application.
FIG. 11 is a block diagram of a fault diagnosis device according to an embodiment of the present application.

### DETAILED DESCRIPTION

Solutions of embodiments of the present application are described clearly and completely in conjunction with the drawings in embodiments of the present application. The embodiments described are some, not all, of embodiments of the present application.

It is to be noted that the terms "first", "second" and the like in the description, claims and drawings of the present application are used for distinguishing between similar objects and are not necessarily used for describing a particular order or sequence. It is to be understood that data used in this manner are interchangeable where appropriate so that the embodiments of the present application described herein can be implemented in an order not illustrated or described herein. In addition, the terms "comprising", "including" or any other variations thereof herein are intended to encompass a non-exclusive inclusion. For example, a process, method, system, product or device that includes a series of steps or elements not only includes the expressly listed steps or elements but may also include other steps or elements that are not expressly listed or are inherent to such process, method, system, product or device.

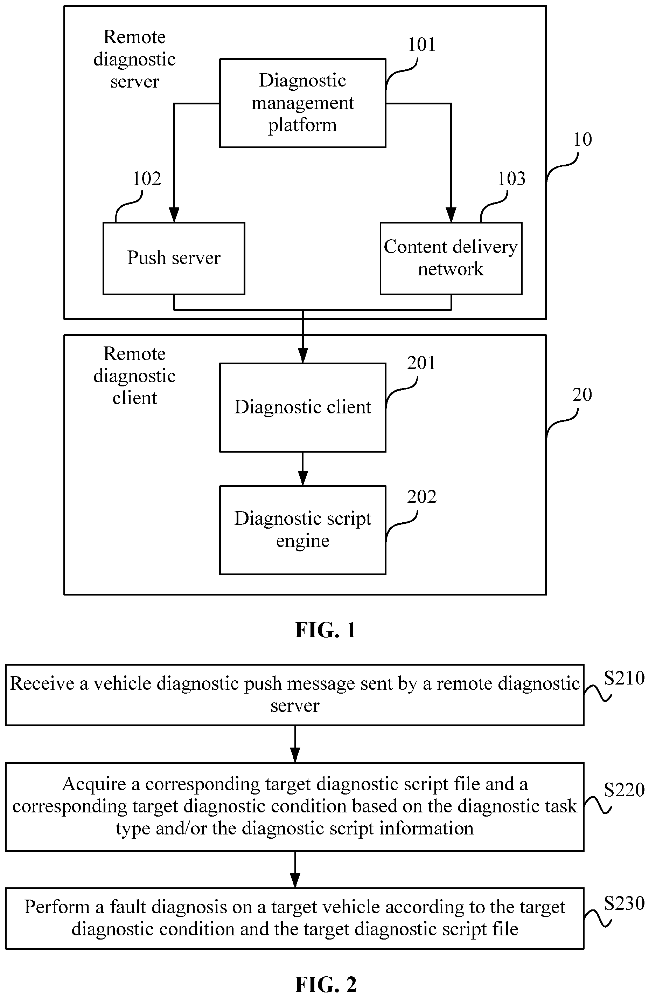

FIG. 1 is a block diagram of a fault diagnosis system according to an embodiment of the present application. The fault diagnosis method of this embodiment of the present application is executed by a remote diagnostic client in a fault diagnosis system. As shown in FIG. 1, the fault diagnosis system of this embodiment of the present application includes a remote diagnostic server 10 and a remote diagnostic client 20. The remote diagnostic server 10 includes a diagnostic management platform 101, a push server 102, and a content delivery network 103. The remote diagnostic client 20 includes a diagnostic client 201 and a diagnostic script engine 202.

The diagnostic management platform 101 is configured to merge a diagnostic database and a corresponding diagnostic sequence into a corresponding diagnostic script file. The diagnostic client 201 is configured to, in response to receiving a vehicle diagnostic push message that is sent by the push server 201 and that carries a diagnostic task type and/or diagnostic script information, receive, based on the diagnostic task type and/or the diagnostic script information, a corresponding target diagnostic script file and a corresponding target diagnostic condition sent by the content delivery network 103; and send the target diagnostic script file to the diagnostic script engine 202 to enable the diagnostic script engine 202 to parse the target diagnostic script file and perform a fault diagnosis on a target vehicle according to the target diagnostic condition and the target diagnostic script file. The target diagnostic script file is obtained from conversion of the diagnostic database and the corresponding diagnostic sequence by the diagnostic management platform 101. The target diagnostic script file is an interpreted language file.

FIG. 2 is a flowchart of a fault diagnosis method according to an embodiment of the present application. This embodiment can be applied to scenarios where simple and convenient fault diagnosis of a vehicle is required. The method can be executed by a fault diagnosis apparatus. The fault diagnosis apparatus may be implemented by software and/or hardware. The fault diagnosis apparatus may be configured in a fault diagnosis device. The fault diagnosis device may be a remote diagnostic client. As shown in FIG. 2, the method includes S210 to S230.

In S210, a vehicle diagnostic push message sent by a remote diagnostic server is received.

The vehicle diagnostic push message includes at least one of the following: a diagnostic task type or diagnostic script information. The remote diagnostic server can also be referred to as a remote diagnostic server or a remote diagnostic cloud (referred to as the cloud). The vehicle diagnostic push message refers to information about diagnostic tasks pushed to the remote diagnostic client. The vehicle diagnostic push message may include at least one of the following: a diagnostic task type or diagnostic script information. The diagnostic task type represents the type of a diagnostic task. The diagnostic task type may include a basic diagnosis and a script diagnosis. The basic diagnosis refers to a diagnostic task necessary for a single diagnostic process on the target vehicle. For example, the basic diagnosis may include, but is not limited to: diagnosing faults in the temperature sensor of the target vehicle; diagnosing faults in the voltage sensor of the target vehicle; and diagnosing faults in the rotation speed of the transmitter in the target vehicle. The script diagnosis refers to a diagnostic task performed after a basic diagnosis to conduct further checks on an electronic control unit (ECU) in the target vehicle. For example, the script diagnosis may include that if the engine in the target vehicle has a high coolant temperature, it is required to check whether the cooling system or the temperature control system is normal. In an example, different fields can be used to represent different diagnostic task types. For example, "00" represents a basic diagnosis while "01" represents a script diagnosis.

The diagnostic script information refers to the relevant attribute information of a diagnostic script file. By way of example, the diagnostic script information includes, but is not limited to: the size of the diagnostic script file, the download path of the diagnostic script file, and the checksum of the diagnostic script file.

In an embodiment, a diagnostic management platform in the remote diagnostic server sends a vehicle diagnostic push message containing the diagnostic task to the diagnostic client in the remote diagnostic client. The vehicle diagnostic push message includes at least the diagnostic task type and/or diagnostic script information.

In S220, a corresponding target diagnostic script file and a corresponding target diagnostic condition are acquired based on the diagnostic task type and/or the diagnostic script information.

The target diagnostic script file is obtained from conversion of the diagnostic database and the corresponding diagnostic sequence. The target diagnostic script file is an interpreted language file. The diagnostic database may be in a format such as ODX or Excel. The diagnostic sequence may be in the OTX format or in a custom format.

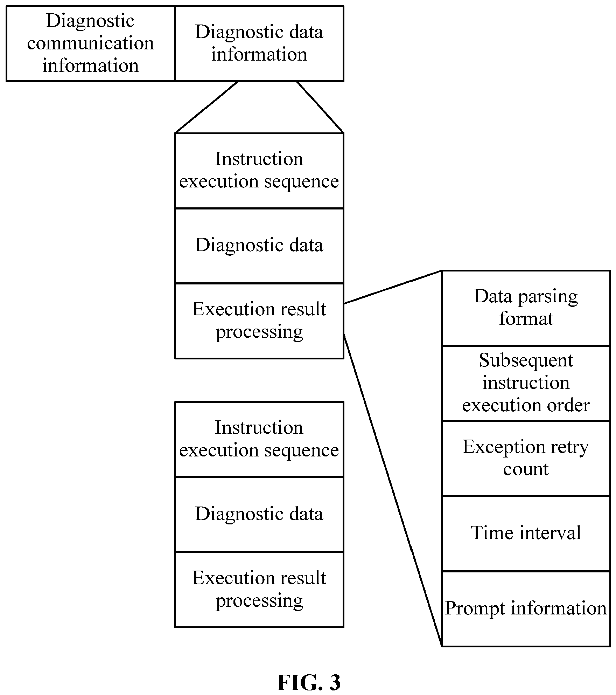

In an embodiment, the data structure of the diagnostic script file can be configured according to the characteristics of the interpretive language used. FIG. 3 is a diagram illustrating configuration of a data structure of a diagnostic script file according to an embodiment of the present application. As shown in FIG. 3, the diagnostic script file includes diagnostic communication information and diagnostic data information. The diagnostic communication information includes at least access information of a to-be-diagnosed electronic control unit (ECU). The diagnostic data information includes at least an instruction execution sequence, diagnostic data, and execution result processing. The access information of the to-be-diagnosed ECU can be understood as the connection information of the to-be-diagnosed ECU, such as a logical address. Diagnostic data information, or a diagnostic step set, is a collection of all diagnostic steps. Each diagnostic step includes three parts: execution order, diagnostic data, and execution result processing. The execution result describes the analysis and processing logic for the diagnostic result, which may include data parsing format, subsequent instruction execution order, exception retry count, time interval, and prompt information. The data parsing format refers to the format for extracting data from the returned result, such as which data should be sent back to the remote diagnostic server. The subsequent instruction execution order refers to the step number for the next action based on the returned data. The exception retry count indicates the number of retries if an exception occurs in the current command. The time interval refers to the time interval between the current command and the next command. The prompt information refers to the prompt information provided for the user if an exception occurs in the current command.

The diagnostic database contains diagnostic communication information and diagnostic data from the diagnostic data information. The instruction execution order and result processing in the diagnostic data information are all a diagnostic sequence.

In an embodiment, the target diagnostic script file refers to the diagnostic script that matches the current diagnostic task. The target diagnostic condition refers to the operating state that the target vehicle needs to maintain while executing the target diagnostic script file. It can be understood that the diagnostic script file corresponds to the diagnostic condition correspond one to one, meaning each target diagnostic script file corresponds to a target diagnostic condition. The corresponding target diagnostic script file and target diagnostic condition can be obtained from different databases based on the diagnostic task type and/or diagnostic script information.

In S230, a fault diagnosis is performed on a target vehicle according to the target diagnostic condition and the target diagnostic script file.

In an embodiment, in response to the current operating status of the target vehicle satisfying the target diagnostic condition, the fault diagnosis is performed on one or more ECUs in the target vehicle according to the target diagnostic script file.

In the solution of this embodiment, the remote diagnostic server converts the diagnostic database and the diagnostic sequence into a diagnostic script file based on an interpretive language and more operable by the remote diagnostic client and sends the diagnostic script file to the remote diagnostic client. This saves the remote diagnostic client the trouble of parsing the diagnostic sequence and frequently reading the diagnostic database, thereby reducing the load on the remote diagnostic client and improving the execution efficiency of a diagnostic task. Moreover, this improves the diagnostic efficiency by partitioning diagnostic task types to facilitate acquisition of target diagnostic script files from different databases based on task types.

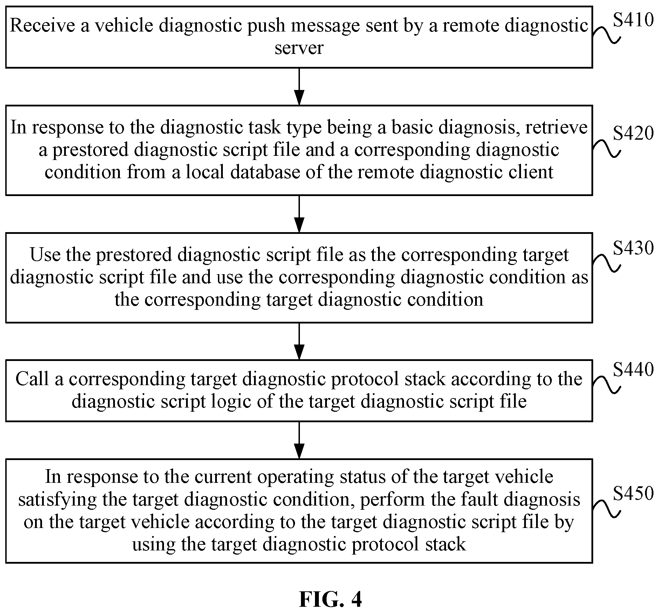

FIG. 4 is a flowchart of a fault diagnosis method according to an embodiment of the present application. Based on the previous embodiments, this embodiment describes the process of fault diagnosis when the diagnostic task type is a basic diagnosis. As shown in FIG. 4, the method includes S410 to S450.

In S410, a vehicle diagnostic push message sent by a remote diagnostic server is received.

The vehicle diagnostic push message includes at least one of the following: a diagnostic task type or diagnostic script information.

In S420, in response to the diagnostic task type being a basic diagnosis, a prestored diagnostic script file and a corresponding diagnostic condition are retrieved from a local database of the remote diagnostic client.

In response to the diagnostic task type being a basic diagnosis, the diagnostic client in the remote diagnostic client may directly retrieve a prestored diagnostic script file and a corresponding diagnostic condition from a local database of the remote diagnostic client.

In S430, the prestored diagnostic script file is used as the corresponding target diagnostic script file, and the corresponding diagnostic condition is used as the corresponding target diagnostic condition.

The diagnostic client in the remote diagnostic client uses the prestored diagnostic script file as the corresponding target diagnostic script file and uses the diagnostic condition corresponding to the target diagnostic file as the target diagnostic condition.

In S440, a corresponding target diagnostic protocol stack is called according to the diagnostic script logic of the target diagnostic script file.

The target diagnostic protocol stack refers to a diagnostic protocol stack that enables the remote diagnostic client to execute the target diagnostic script file. By way of example, the target diagnostic protocol stack may include, but is not limited to, a Unified Diagnostic Services (UDS) protocol stack or a Diagnostics over Internet Protocol (DoIP) protocol stack.

In S450, in response to the current operating status of the target vehicle satisfying the target diagnostic condition, the fault diagnosis is performed on the target vehicle according to the target diagnostic script file by using the target diagnostic protocol stack.

In response to the current operating status of the target vehicle satisfying the target diagnostic condition, the diagnostic script engine in the remote diagnostic client calls the target diagnostic protocol stack to execute the target diagnostic script file to perform the fault diagnosis on the target vehicle.

The solution of this embodiment involves prestoring, in the remote diagnostic client, the target diagnostic script file and the target diagnostic condition for frequently used basic diagnosis. This avoids the need to frequently retrieve the target diagnostic script file from the remote diagnostic server, thereby improving the diagnostic efficiency.

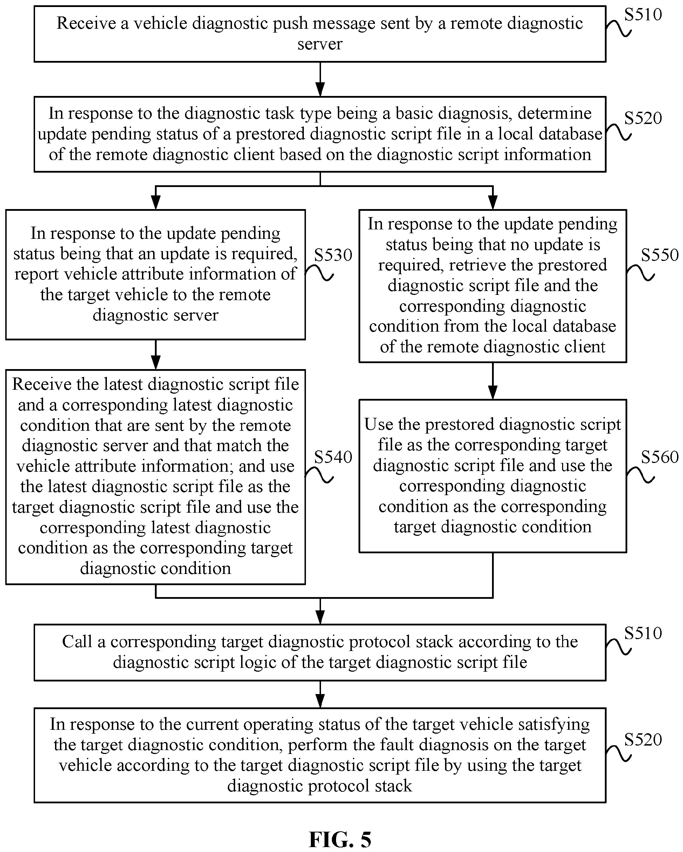

FIG. 5 is a flowchart of a fault diagnosis method according to an embodiment of the present application. Based on the previous embodiments, this embodiment describes the process of fault diagnosis when the diagnostic task type is a basic diagnosis. As shown in FIG. 5, the method includes S510 to S580.

In S510, a vehicle diagnostic push message sent by a remote diagnostic server is received.

The vehicle diagnostic push message includes at least one of the following: a diagnostic task type or diagnostic script information.

In S520, in response to the diagnostic task type being a basic diagnosis, update pending status of a prestored diagnostic script file in a local database of the remote diagnostic client is determined based on the diagnostic script information.

The update pending status represents whether the prestored diagnostic script file in the local database matches the diagnostic script information. If the prestored diagnostic script file in the local database matches the diagnostic script information, it is not required to update the prestored diagnostic script file in the local database. If the prestored diagnostic script file in the local database does not match the diagnostic script information, it is required to update the prestored diagnostic script file in the local database.

In S530, in response to the update pending status being that an update is required, vehicle attribute information of the target vehicle is reported to the remote diagnostic server.

The vehicle attribute information refers to the attribute information of the target vehicle. By way of example, the vehicle attribute information may include, but is not limited to, vehicle identification and ECU identification. If the prestored diagnostic script file in the local database does not match the diagnostic script information, it is required to update the prestored diagnostic script file in the local database and it is required for the remote diagnostic client to report the vehicle attribute information of the target vehicle to the remote diagnostic server.

In S540, the latest diagnostic script file and a corresponding latest diagnostic condition that are sent by the remote diagnostic server and that match the vehicle attribute information are received; and the latest diagnostic script file is used as the target diagnostic script file, and the corresponding latest diagnostic condition is used as the corresponding target diagnostic condition.

After receiving the vehicle attribute information of the target vehicle reported by the remote diagnostic client, the remote diagnostic server determines, based on the vehicle attribute information, whether there is a corresponding diagnostic script file that can be sent. If such a script file exists, the server sends the latest diagnostic script file and the corresponding latest diagnostic condition that match the vehicle attribute information to the remote diagnostic client; and the latest diagnostic script file is used as the target diagnostic script file, and the latest diagnostic condition corresponding to the latest diagnostic script file is used as the corresponding target diagnostic condition.

In S550, in response to the update pending status being that no update is required, the prestored diagnostic script file and the corresponding diagnostic condition are retrieved from the local database of the remote diagnostic client.

If the prestored diagnostic script file in the local database matches the diagnostic script information, it is not required to update the prestored diagnostic script file in the local database and retrieve the prestored diagnostic script file and the corresponding diagnostic condition from the local database of the remote diagnostic client.

In S560, the prestored diagnostic script file is used as the corresponding target diagnostic script file, and the corresponding diagnostic condition is used as the corresponding target diagnostic condition.

The diagnostic client in the remote diagnostic client uses the prestored diagnostic script file as the corresponding target diagnostic script file and uses the diagnostic condition corresponding to the target diagnostic file as the target diagnostic condition.

In S570, a corresponding target diagnostic protocol stack is called according to the diagnostic script logic of the target diagnostic script file.

In S580, in response to the current operating status of the target vehicle satisfying the target diagnostic condition, the fault diagnosis is performed on the target vehicle according to the target diagnostic script file by using the target diagnostic protocol stack.

For explanation of S570 and S580, see description about S440 and S450.

In the solution of this embodiment, the diagnostic script file and the corresponding diagnostic condition are retrieved from the remote diagnostic server only when the prestored diagnostic script file in the local database of the remote diagnostic client requires updating. Otherwise, the diagnostic script file and the corresponding diagnostic condition are retrieved from the local database of the remote diagnostic client. This avoids the need to frequently retrieve the target diagnostic script file from the remote diagnostic server, thereby improving the diagnostic efficiency.

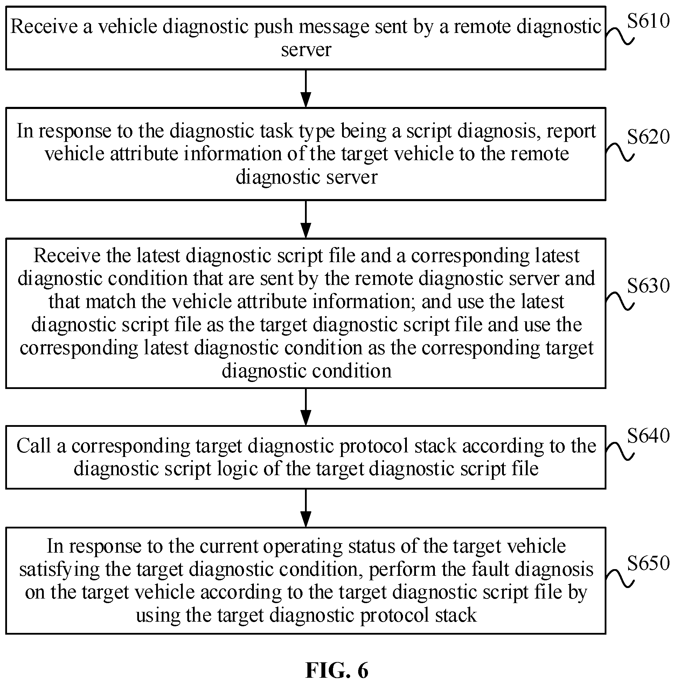

FIG. 6 is a flowchart of a fault diagnosis method according to an embodiment of the present application. Based on the previous embodiments, this embodiment describes the process of fault diagnosis when the diagnostic task type is a script diagnosis. As shown in FIG. 6, the method includes S610 to S650.

In S610, a vehicle diagnostic push message sent by a remote diagnostic server is received.

The vehicle diagnostic push message includes at least one of the following: a diagnostic task type or diagnostic script information.

In S620, in response to the diagnostic task type being a script diagnosis, vehicle attribute information of the target vehicle is reported to the remote diagnostic server.

In S630, the latest diagnostic script file and a corresponding latest diagnostic condition that are sent by the remote diagnostic server and that match the vehicle attribute information are received; and the latest diagnostic script file is used as the target diagnostic script file, and the corresponding latest diagnostic condition is used as the corresponding target diagnostic condition.

In S640, a corresponding target diagnostic protocol stack is called according to the diagnostic script logic of the target diagnostic script file.

In S650, in response to the current operating status of the target vehicle satisfying the target diagnostic condition, the fault diagnosis is performed on the target vehicle according to the target diagnostic script file by using the target diagnostic protocol stack.

If the diagnostic task type is a script diagnosis, the remote diagnostic client is required to report the vehicle attribute information of the target vehicle to the remote diagnostic server; receive the latest diagnostic script file and the corresponding latest diagnostic condition that are sent by the remote diagnostic server and that match the vehicle attribute information; and perform the fault diagnosis according to the latest diagnostic script file and the corresponding latest diagnostic condition.

For explanation of the process of reporting the vehicle attribute information of the target vehicle to the remote diagnostic server in S620 and the process of receiving the latest diagnostic script file and the corresponding latest diagnostic condition in S630, see description about S530 and S540. For explanation of S640 and S650, see description in the previous embodiments.

In an embodiment, after performing the fault diagnosis on the target vehicle according to the target diagnostic condition and the target diagnostic script file, the method also includes, for each diagnostic instruction in the target diagnostic script file, acquiring an execution result of the diagnostic instruction; parsing the execution result based on a data parsing format that is included in the target diagnostic script file and that matches the diagnostic instruction to obtain a diagnostic result; and reporting the diagnostic result and the execution result to the remote diagnostic server. The data parsing format refers to the format for parsing the execution result. For example, parsing a piece of data in the execution result into the corresponding meaning by using the data parsing format means that diagnostic instructions correspond to data parsing formats one to one. In an embodiment, the remote diagnostic client retrieves the execution result of each diagnostic instruction from the target diagnostic script file and parses the result based on the corresponding data parsing format to obtain the corresponding diagnostic result; caches the execution result and the corresponding diagnostic result; and, after all diagnostic instructions in the target diagnostic script file have been executed, reports execution results of all diagnostic instructions in the target diagnostic script file and the corresponding diagnostic results to the remote diagnostic server.

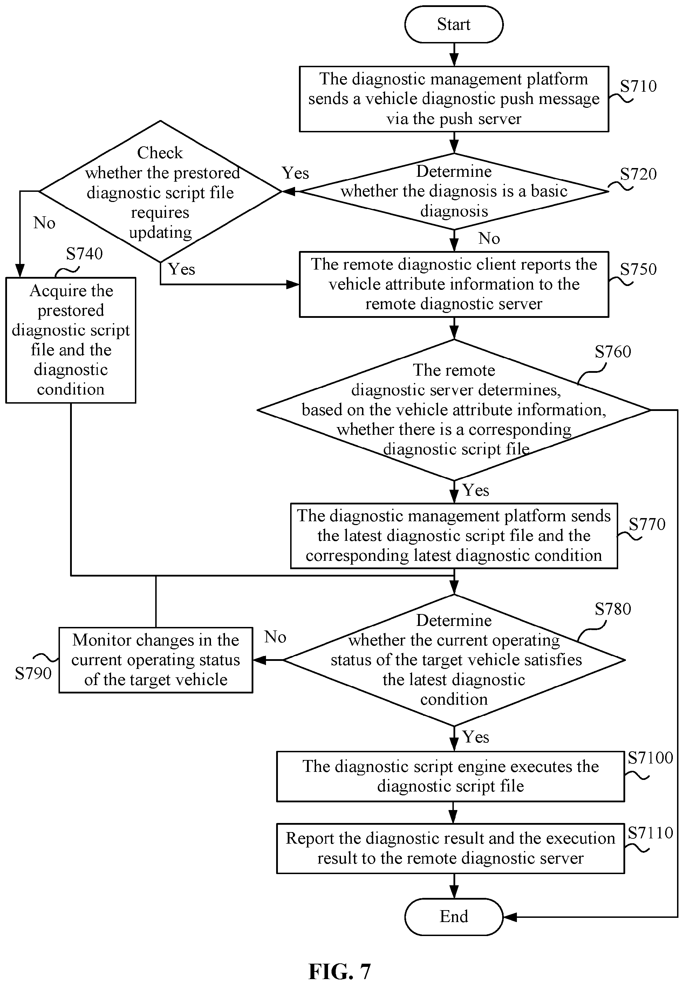

FIG. 7 is a flowchart of a fault diagnosis method according to an embodiment of the present application. In this embodiment, the vehicle fault diagnosis process is explained. As shown in FIG. 7, the fault diagnosis method of this embodiment includes S710 to S7110.

In S710, the diagnostic management platform sends a vehicle diagnostic push message via the push server.

In S720, it is determined whether the diagnosis is a basic diagnosis. If the diagnosis is a basic diagnosis, the process proceeds to S730. If the diagnosis is not a basic diagnosis, the process proceeds to S750.

In S730, it is checked whether the prestored diagnostic script file requires updating. If the prestored diagnostic script file requires updating, the process proceeds to S750. If the prestored diagnostic script file requires no updating, the process proceeds to S740.

In S740, the prestored diagnostic script file and the diagnostic condition are acquired.

In S750, the remote diagnostic client reports the vehicle attribute information to the remote diagnostic server.

In S760, the remote diagnostic server determines, based on the vehicle attribute information, whether there is a corresponding diagnostic script file. If there is a corresponding diagnostic script file, the process proceeds to S770. If there is no corresponding diagnostic script file, the process ends.

In S770, the diagnostic management platform sends the latest diagnostic script file and the corresponding latest diagnostic condition.

In S780, it is determined whether the current operating status of the target vehicle satisfies the latest diagnostic condition. If the current operating status of the target vehicle satisfies the latest diagnostic condition, the process proceeds to S7100. If the current operating status of the target vehicle does not satisfy the latest diagnostic condition, the process proceeds to S790.

In S790, changes in the current operating status of the target vehicle are monitored.

In S7100, the diagnostic script engine executes the diagnostic script file.

In S7110, the diagnostic result and the execution result are reported to the remote diagnostic server.

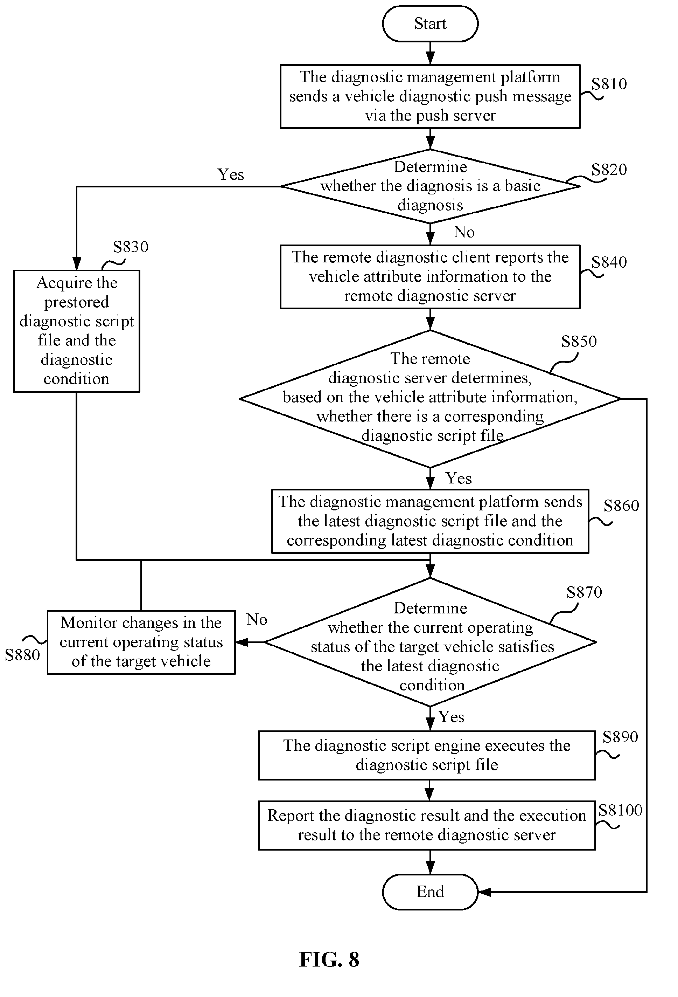

FIG. 8 is a flowchart of a fault diagnosis method according to an embodiment of the present application. In this embodiment, the vehicle fault diagnosis process is explained. As shown in FIG. 8, the fault diagnosis method of this embodiment includes S810 to S8100.

In S810, the diagnostic management platform sends a vehicle diagnostic push message via the push server.

In S820, it is determined whether the diagnosis is a basic diagnosis. If the diagnosis is a basic diagnosis, the process proceeds to S830. If the diagnosis is not a basic diagnosis, the process proceeds to S840.

In S830, the prestored diagnostic script file and the diagnostic condition are acquired.

In S840, the remote diagnostic client reports the vehicle attribute information to the remote diagnostic server.

In S850, the remote diagnostic server determines, based on the vehicle attribute information, whether there is a corresponding diagnostic script file. If there is a corresponding diagnostic script file, the process proceeds to S860. If there is no corresponding diagnostic script file, the process ends.

In S860, the diagnostic management platform sends the latest diagnostic script file and the corresponding latest diagnostic condition.

In S870, it is determined whether the current operating status of the target vehicle satisfies the latest diagnostic condition. If the current operating status of the target vehicle satisfies the latest diagnostic condition, the process proceeds to S890. If the current operating status of the target vehicle does not satisfy the latest diagnostic condition, the process proceeds to S880.

In S880, changes in the current operating status of the target vehicle are monitored.

In S890, the diagnostic script engine executes the diagnostic script file.

In S8100, the diagnostic result and the execution result are reported to the remote diagnostic server.

The difference between the fault diagnosis process shown in FIG. 8 and the fault diagnosis process shown in FIG. 7 is as follows: For a basic diagnosis, it is not required to check whether the prestored diagnostic script file in the local database requires updating; and in the case where the basic diagnostic script requires updating, the process follows the script diagnosis flow.

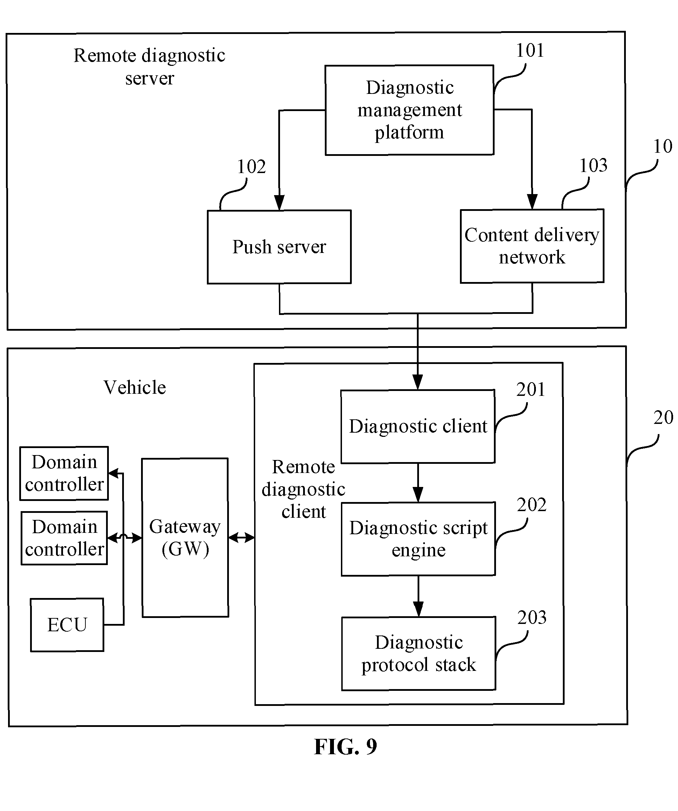

FIG. 9 is a block diagram of a fault diagnosis system according to an embodiment of the present application. As shown in FIG. 9, the fault diagnosis system of this embodiment is structured as follows:

The diagnostic management platform 101 (cloud) primarily combines the diagnostic database (in a format such as ODX/Excel) and the corresponding diagnostic sequence (in the OTX or custom format) into a diagnostic script file, sends the diagnostic script file to the diagnostic client 201 (typically the TBox, adjustable depending on the project) located at the main node on the vehicle side. The diagnostic client 201 sends the diagnostic script to the diagnostic script engine 202. The diagnostic script engine 202 is responsible for parsing the diagnostic script and diagnosing the relevant ECU based on the content of the script. The diagnostic script is written in an interpreted language (such as Lua/JS). A corresponding virtual machine is integrated in the diagnostic script engine 202 to ensure that the interpreted language code can be executed and can interact with the underlying diagnostic protocol stack (UDS/DoIP) 203. This allows for implementation of various diagnostic functions through different diagnostic script logics without modifying the vehicle-side diagnostic application code.

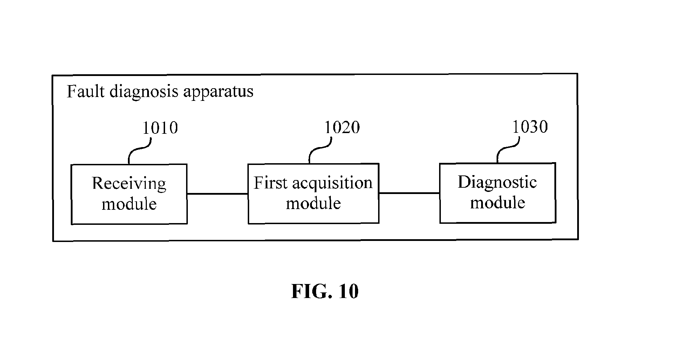

FIG. 10 is a diagram illustrating the structure of a fault diagnosis apparatus according to an embodiment of the present application. As shown in FIG. 10, the apparatus includes a receiving module 1010, a first acquisition module 1020, and a diagnostic module 1030.

The receiving module 1010 is configured to receive a vehicle diagnostic push message sent by a remote diagnostic server. The vehicle diagnostic push message includes at least one of the following: a diagnostic task type or diagnostic script information.

The first acquisition module 1020 is configured to acquire a corresponding target diagnostic script file and a corresponding target diagnostic condition based on the diagnostic task type and/or the diagnostic script information. The target diagnostic script file is obtained from conversion of a diagnostic database and a diagnostic sequence. The target diagnostic script file is an interpreted language file.

The diagnostic module 1030 is configured to perform a fault diagnosis on a target vehicle according to the target diagnostic condition and the target diagnostic script file.

In an embodiment, the acquisition module includes a first acquisition unit and a second acquisition unit.

The first acquisition unit is configured to, in response to the diagnostic task type being a basic diagnosis, retrieve a prestored diagnostic script file and a corresponding diagnostic condition from a local database of the remote diagnostic client.

The second acquisition unit is configured to use the prestored diagnostic script file as the corresponding target diagnostic script file and use the corresponding diagnostic condition as the corresponding target diagnostic condition.

In an embodiment, the acquisition module includes a first determination unit, a first reporting unit, and a first receiving unit.

The first determination unit is configured to, in response to the diagnostic task type being a basic diagnosis, determine update pending status of a prestored diagnostic script file in a local database of the remote diagnostic client based on the diagnostic script information.

The first reporting unit is configured to, in response to the update pending status being that an update is required, report vehicle attribute information of the target vehicle to the remote diagnostic server.

The first receiving unit is configured to receive the latest diagnostic script file and a corresponding latest diagnostic condition that are sent by the remote diagnostic server and that match the vehicle attribute information; and use the latest diagnostic script file as the target diagnostic script file and use the corresponding latest diagnostic condition as the corresponding target diagnostic condition.

In an embodiment, the acquisition module includes a second reporting unit and a second receiving unit.

The second reporting unit is configured to, in response to the diagnostic task type being a script diagnosis, report vehicle attribute information of the target vehicle to the remote diagnostic server.

The second receiving unit is configured to receive the latest diagnostic script file and a corresponding latest diagnostic condition that are sent by the remote diagnostic server and that match the vehicle attribute information; and use the latest diagnostic script file as the target diagnostic script file and use the corresponding latest diagnostic condition as the corresponding target diagnostic condition.

In an embodiment, the diagnostic module includes a calling unit and a diagnostic unit.

The calling unit is configured to call a corresponding target diagnostic protocol stack according to the diagnostic script logic of the target diagnostic script file.

The diagnostic unit is configured to, in response to the current operating status of the target vehicle satisfying the target diagnostic condition, perform the fault diagnosis on the target vehicle according to the target diagnostic script file by using the target diagnostic protocol stack.

In an embodiment, after performing the fault diagnosis on the target vehicle according to the target diagnostic condition and the target diagnostic script file, the fault diagnosis apparatus also includes a second acquisition module, a parsing module, and a reporting module.

The second acquisition module is configured to, for each diagnostic instruction in the target diagnostic script file, acquire the execution result of the diagnostic instruction.

The parsing module is configured to parse the execution result based on a data parsing format that is included in the target diagnostic script file and that matches the diagnostic instruction to obtain a diagnostic result.

The reporting module is configured to report the diagnostic result and the execution result to the remote diagnostic server.

In an embodiment, in response to the diagnostic script information being empty, the diagnostic task type is determined as a basic diagnosis; or in response to the diagnostic script information being non-empty, the diagnostic task type is determined as a script diagnosis.

In an embodiment, the vehicle diagnostic script file includes diagnostic communication information and diagnostic data information.

The diagnostic communication information includes at least access information of a to-be-diagnosed electronic control unit (ECU).

The diagnostic data information includes at least an instruction execution sequence, diagnostic data, and execution result processing.

The fault diagnosis apparatus of this embodiment of the present application can execute the fault diagnosis method of any embodiment of the present application and has corresponding function modules and beneficial effects of the executed method.

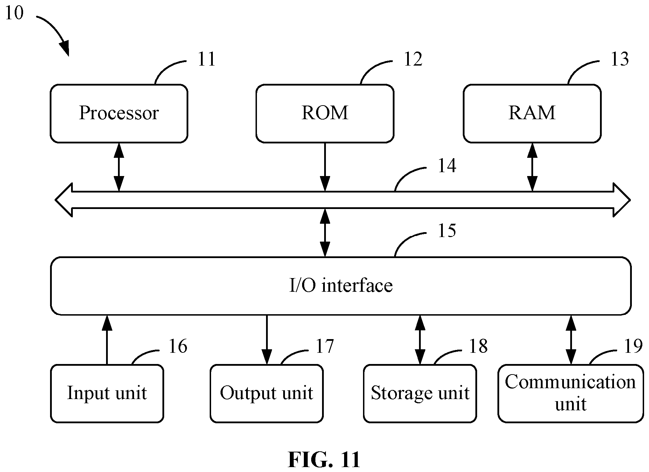

FIG. 11 is a block diagram of a fault diagnosis device according to an embodiment of the present application. FIG. 11 shows the structure of a fault diagnosis device 10 for implementing any embodiment of the present application. The fault diagnosis device is intended to represent various forms of digital computers, for example, a laptop computer, a desktop computer, a worktable, a personal digital assistant, a server, a blade server, a mainframe computer and an applicable computer. The fault diagnosis device may also represent various forms of mobile apparatuses, for example, a personal digital assistant, a cellphone, a smartphone, a wearable device (such as a helmet, glasses and a watch) and a similar computing apparatus. Herein the shown components, the connections and relationships between these components, and the functions of these components are merely illustrative and are not intended to limit the implementation of the present application as described and/or claimed herein.

As shown in FIG. 11, the fault diagnosis device 10 includes at least one processor 11 and a memory (such as a read-only memory (ROM) 12 and a random-access memory (RAM) 13) communicatively connected to the at least one processor 11. The memory stores a computer program executable by the at least one processor, and the processor 11 may perform various types of appropriate operations and processing according to a computer program stored in a ROM 12 or a computer program loaded from a storage unit 18 to a RAM 13. Various programs and data required for the operation of the fault diagnosis device 10 are also stored in the RAM 13. The processors 11, the ROM 12, and the RAM 13 are connected to each other through a bus 14. An input/output (I/O) interface 15 is also connected to the bus 14.

Multiple components in the fault diagnosis device 10 are connected to the I/O interface 15. The multiple components include an input unit 16 such as a keyboard or a mouse, an output unit 17 such as various types of displays or speakers, the storage unit 18 such as a magnetic disk or an optical disk, and a communication unit 19 such as a network card, a modem or a wireless communication transceiver. The communication unit 19 allows the fault diagnosis device 10 to exchange information/data with other devices over a computer network such as the Internet and/or various telecommunications networks.

The processor 11 may be various general-purpose and/or special-purpose processing components having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller and microcontroller. The processor 11 performs the various methods and processing described above, such as the fault diagnosis method.

In some examples, the fault diagnosis method may be implemented as computer programs tangibly contained in a computer-readable storage medium such as the storage unit 18. In some embodiments, part or all of computer programs may be loaded and/or installed onto the fault diagnosis device 10 via the ROM 12 and/or the communication unit 19. When the computer programs are loaded to the RAM 13 and executed by the processor 11, one or more steps of the preceding fault diagnosis method may be performed. Alternatively, in other embodiments, the processor 11 may be configured, in any other suitable manner (for example, by means of firmware), to perform the fault diagnosis method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device and at least one output device and transmitting the data and instructions to the memory system, the at least one input device and the at least one output device.

Computer programs for implementation of the methods of the present application may be written in one programming language or any combination of multiple programming languages. These computer programs may be provided for a processor of a general-purpose computer, a special-purpose computer or another programmable data processing apparatus such that the computer programs, when executed by the processor, cause functions/operations specified in the flowcharts and/or block diagrams to be implemented. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program for use by or in connection with an instruction execution system, apparatus or device. The computer-readable storage medium may include, but is not limited to, an electronic, magnetic, optical, electromagnetic, infrared or semiconductor system, apparatus or device or any appropriate combination thereof. Alternatively, the computer-readable storage medium may be a machine-readable signal medium. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on the fault diagnosis device. The fault diagnosis device has a display device (for example, a cathode-ray tube (CRT) or a liquid-crystal display (LCD) monitor) for displaying information to the user, and a keyboard and a pointing device (for example, a mouse or a trackball) through which the user can provide input for the fault diagnosis device. Other types of apparatuses may also be used for providing interaction with the user. For example, feedback provided for the user may be sensory feedback in any form (for example, visual feedback, auditory feedback or tactile feedback); and input from the user may be received in any form (including acoustic input, voice input or tactile input).

The systems and techniques described herein may be implemented in a computing system including a back-end component (for example, a data server), a computing system including a middleware component (for example, an application server), a computing system including a front-end component (for example, a user computer having a graphical user interface or a web browser through which the user can interact with embodiments of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS).

It is to be understood that various forms of the preceding flows may be used with steps reordered, added, or deleted. For example, the steps described in the present application may be executed in parallel, in sequence or in a different order as long as the desired results of the technical solutions of the present application can be achieved. The execution sequence of the steps is not limited herein.

## Claims

1. A fault diagnosis method, the method being applied by a remote diagnostic client and comprising:
receiving a vehicle diagnostic push message sent by a remote diagnostic server, wherein the vehicle diagnostic push message comprises at least one of a diagnostic task type or diagnostic script information;
acquiring a target diagnostic script file and a target diagnostic condition based on the at least one of the diagnostic task type or the diagnostic script information, wherein the target diagnostic script file is obtained from conversion of a diagnostic database and a diagnostic sequence, and the target diagnostic script file is an interpreted language file; and
performing a fault diagnosis on a target vehicle according to the target diagnostic condition and the target diagnostic script file.

2. The method of claim 1, wherein acquiring the target diagnostic script file and the target diagnostic condition based on the diagnostic task type comprises:
in response to the diagnostic task type being a basic diagnosis, retrieving a prestored diagnostic script file and a diagnostic condition corresponding to the prestored diagnostic script file from a local database of the remote diagnostic client; and
using the prestored diagnostic script file as the target diagnostic script file and using the diagnostic condition corresponding to the prestored diagnostic script file as the target diagnostic condition.

3. The method of claim 1, wherein acquiring the target diagnostic script file and the target diagnostic condition based on the diagnostic task type and the diagnostic script information comprises:
in response to the diagnostic task type being a basic diagnosis, determining update pending status of a prestored diagnostic script file in a local database of the remote diagnostic client based on the diagnostic script information;
in response to the update pending status being that an update is required, reporting vehicle attribute information of the target vehicle to the remote diagnostic server; and
receiving a latest diagnostic script file and a corresponding latest diagnostic condition that are sent by the remote diagnostic server and that match the vehicle attribute information; and using the latest diagnostic script file as the target diagnostic script file and using the corresponding latest diagnostic condition as the target diagnostic condition.

4. The method of claim 1, wherein acquiring the target diagnostic script file and the target diagnostic condition based on the diagnostic task type and the diagnostic script information comprises:
in response to the diagnostic task type being a script diagnosis, reporting vehicle attribute information of the target vehicle to the remote diagnostic server; and
receiving a latest diagnostic script file and a corresponding latest diagnostic condition that are sent by the remote diagnostic server and that match the vehicle attribute information; and using the latest diagnostic script file as the target diagnostic script file and using the corresponding latest diagnostic condition as the target diagnostic condition.

5. The method of claim 1, wherein performing the fault diagnosis on the target vehicle according to the target diagnostic condition and the target diagnostic script file comprises:
calling a corresponding target diagnostic protocol stack according to a diagnostic script logic of the target diagnostic script file; and
in response to current operating status of the target vehicle satisfying the target diagnostic condition, performing the fault diagnosis on the target vehicle according to the target diagnostic script file by using the target diagnostic protocol stack.

6. The method of any one of claims 1 to 5, after performing the fault diagnosis on the target vehicle according to the target diagnostic condition and the target diagnostic script file, the method further comprising:
for each diagnostic instruction in the target diagnostic script file, acquiring an execution result of the diagnostic instruction;
parsing the execution result based on a data parsing format that is comprised in the target diagnostic script file and that matches the diagnostic instruction to obtain a diagnostic result; and
reporting the diagnostic result and the execution result to the remote diagnostic server.

7. The method of any one of claims 1 to 5, wherein in response to the diagnostic script information being empty, the diagnostic task type is determined as a basic diagnosis; or
in response to the diagnostic script information being non-empty, the diagnostic task type is determined as a script diagnosis.

8. The method of any one of claims 1 to 5, wherein the diagnostic script file comprises diagnostic communication information and diagnostic data information, wherein
the diagnostic communication information comprises at least access information of a to-be-diagnosed electronic control unit (ECU); and
the diagnostic data information comprises at least an instruction execution sequence, diagnostic data, and execution result processing.

9. A fault diagnosis system, comprising a remote diagnostic server and a remote diagnostic client, wherein the remote diagnostic server comprises a diagnostic management platform, a push server, and a content delivery network, and the remote diagnostic client comprises a diagnostic client and a diagnostic script engine, wherein
the diagnostic management platform is configured to merge a diagnostic database and a diagnostic sequence into a diagnostic script file; and
the diagnostic client is configured to, in response to receiving a vehicle diagnostic push message that is sent by the push server and that carries at least one of a diagnostic task type or diagnostic script information, receive, based on the at least one of the diagnostic task type or the diagnostic script information, a target diagnostic script file and a target diagnostic condition sent by the content delivery network; and send the target diagnostic script file to the diagnostic script engine to enable the diagnostic script engine to parse the target diagnostic script file and perform a fault diagnosis on a target vehicle according to the target diagnostic condition and the target diagnostic script file,
wherein the target diagnostic script file is obtained from conversion of the diagnostic database and the diagnostic sequence by the diagnostic management platform, and the target diagnostic script file is an interpreted language file.

10. A fault diagnosis device, comprising:
at least one processor; and
a memory communicatively connected to the at least one processor,
wherein the memory stores a computer program executable by the at least one processor to cause the at least one processor to perform the fault diagnosis method of any one of claims 1 to 8.

11. A computer-readable storage medium storing computer instructions which, when executed by a processor, cause the processor to perform the fault diagnosis method of any one of claims 1 to 8.
